(19) **Europäisches Patentamt / European Patent Office / Office européen des brevets**

(11) **EP 4 618 599 A1**

(12) **EUROPEAN PATENT APPLICATION**
published in accordance with Art. 153(4) EPC

(43) Date of publication:
**17.09.2025 Bulletin 2025/38**

(21) Application number: **23887830.0**

(22) Date of filing: **30.10.2023**

(51) International Patent Classification (IPC):
**H04W 4/44** (2018.01)    **H04W 16/22** (2009.01)

(52) Cooperative Patent Classification (CPC):
**H04W 4/44; H04W 16/22**

(86) International application number:
**PCT/CN2023/127759**

(87) International publication number:
**WO 2024/099140 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.11.2022 CN 202211387143**

(71) Applicant: **Vivo Mobile Communication Co., Ltd.
Dongguan, Guangdong 523863 (CN)**

(72) Inventors:
• **ZHOU, Tong**
  **Dongguan, Guangdong 523863 (CN)**
• **YUAN, Yannan**
  **Dongguan, Guangdong 523863 (CN)**

(74) Representative: **Walaski, Jan Filip et al
Venner Shipley LLP
200 Aldersgate
London EC1A 4HD (GB)**

(54) **ARTIFICIAL INTELLIGENCE (AI) SERVICE PROCESSING METHOD AND DEVICE**

(57) This application discloses an artificial intelligence AI service processing method and a device, pertaining to the field of communication technologies. The artificial intelligence AI service processing method of embodiments of this application includes: receiving, by a network-side device, an AI service request from a target device, where the AI service request includes an AI service identifier of a requested first service and AI assistance information, the AI assistance information includes AI service trigger information and/or assistance information related to an AI model; and feeding back, by the network-side device, a service result of the first service to the target device based on the AI service identifier of the first service and the AI assistance information.

A network-side device receives an AI service request from a target device, where the AI service request includes an AI service identifier of a requested first service and AI assistance information, the AI assistance information includes AI service trigger information and/or assistance information related to an AI model ⟶ 101

The network-side device feeds back a service result of the first service to the target device based on the AI service identifier of the first service and the AI assistance information ⟶ 102

FIG. 2

EP 4 618 599 A1

**Description**

**CROSS-REFERENCE TO RELATED APPLICATIONS**

This application claims priority to Chinese Patent Application No. 202211387143.3, filed in China on November 7, 2022, which is incorporated herein by reference in its entirety.

TECHNICAL FIELD

This application pertains to the field of communication technologies, and specifically relates to an artificial intelligence AI service processing method and a device.

**BACKGROUND**

In mobile communication systems, an increasing number of use cases incorporate artificial intelligence (Artificial Intelligence, AI). For example, at the physical layer, there are AI-based CSI (channel state information) feedback compression, AI-based beam management, and AI-based positioning. The 3GPP RAN3 has discussed AI-based energy saving, AI-based load balancing, and the like. In the future, more AI-integrated use cases will emerge in mobile communication systems.

Future mobile communication systems will not only provide AI services internally for communication systems but also externally for applications such as autonomous driving, drones, and robotics. Currently, wireless networks of the mobile communication systems merely serve as communication pipelines, that is, merely transmit information and cannot provide AI services to external applications. Therefore, how to better support AI services in mobile communication systems is a problem that needs to be addressed.

**SUMMARY**

Embodiments of this application provide an artificial intelligence AI service processing method and a device, which can resolve the problem of how to better support AI services in mobile communication systems.

According to a first aspect, an artificial intelligence AI service processing method is provided, including:

receiving, by a network-side device, an AI service request from a target device, where the AI service request includes an AI service identifier of a requested first service and AI assistance information, the AI assistance information includes AI service trigger information and/or assistance information related to an AI model; and

feeding back, by the network-side device, a service result of the first service to the target device based on the AI service identifier of the first service and the AI assistance information.

According to a second aspect, an artificial intelligence AI service processing method is provided, including:

sending, by a target device, an AI service request to a network-side device, where the AI service request includes a service identifier of a first service and AI assistance information, and the AI assistance information includes AI service trigger information and/or assistance information related to an AI model; and

receiving, by the target device, a service result of the first service sent by the network-side device.

According to a third aspect, an AI service processing apparatus is provided, including:

a receiving module, configured to receive an AI service request from a target device, where the AI service request includes an AI service identifier of a requested first service and AI assistance information, the AI assistance information includes AI service trigger information and/or assistance information related to an AI model; and

a sending module, configured to feed back a service result of the first service to the target device based on the AI service identifier of the first service and the AI assistance information.

According to a fourth aspect, an AI service processing apparatus is provided, including:

a sending module, configured to send an AI service request to a network-side device, where the AI service request includes a service identifier of a first service and AI assistance information, and the AI assistance information includes AI service trigger information and/or assistance information related to an AI model; and

a receiving module, configured to receive a service result of the first service sent by the network-side device.

According to a fifth aspect, a network-side device is provided, where the network-side device includes a processor and a memory, where a program or instructions capable of running on the processor are stored in the memory. When the program or the instructions are executed by the processor, the steps of the method according to the first aspect are implemented.

According to a sixth aspect, a network-side device is provided, including a processor and a communication interface, where the communication interface is configured to receive an AI service request from a target device, where the AI service request includes an AI service identifier of a requested first service and AI assistance information, the AI assistance information includes AI service trigger information and/or assistance information related to an AI model; and feed back a service result of the first service to the target device based on the AI service identifier of the first service and the AI assistance information.

According to a seventh aspect, a target device is provided, where the target device includes a processor and a memory, a program or instructions capable of running on the processor are stored in the memory, and when the program or the instructions are executed by the processor, the steps of the method according to the first aspect are implemented.

According to an eighth aspect, a target device is provided, including a processor and a communication interface, where the communication interface is configured to send an AI service request to a network-side device, where the AI service request includes a service identifier of a first service and AI assistance information, and the AI assistance information includes AI service trigger information and/or assistance information related to an AI model; and the communication interface is further configured to receive a service result of the first service sent by the network-side device.

According to a ninth aspect, a communication system is provided, including a target device and a network-side device, where the target device can be configured to execute the steps of the AI service processing method according to the second aspect; and the network-side device can be configured to execute the steps of the AI service processing method according to the first aspect.

According to a tenth aspect, a readable storage medium is provided, where a program or instructions are stored in the readable storage medium, and in a case that the program or the instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the method according to the first aspect or the method according to the second aspect.

According to a twelfth aspect, a computer program/program product is provided, where the computer program/-program product is stored in a storage medium, and the computer program/program product is executed by at least one processor to implement the AI service processing method according to the first aspect or the second aspect.

In the embodiments of this application, the network-side device receives an AI service request from the target device, where the AI service request includes an AI service identifier of a requested first service and AI assistance information. The AI assistance information includes AI service trigger information and/or assistance information related to an AI model. The network-side device feeds back a service result of the first service to the target device based on the AI service identifier of the first service and the AI assistance information. In this way, the network-side device identifies the assistance information provided by the target device, so as to provide services for the target device based on the assistance information, thereby improving quality of AI services and providing better support for AI services in mobile communication systems.

**BRIEF DESCRIPTION OF DRAWINGS**

FIG. 1 is a structural diagram of a wireless communication system to which embodiments of this application are applicable;

FIG. 2 is a first flowchart of an AI service processing method according to an embodiment of this application;

FIG. 3 is a first flowchart of interaction of an AI service processing method according to an embodiment of this application;

FIG. 4 is a second flowchart of an AI service processing method according to an embodiment of this application;

FIG. 5 is a first schematic structural diagram of an AI service processing apparatus according to an embodiment of this application;

FIG. 6 is a second schematic structural diagram of an AI service processing apparatus according to an embodiment of this application;

FIG. 7 is a schematic structural diagram of a communication device according to an embodiment of this application;

FIG. 8 is a schematic structural diagram of a terminal according to an embodiment of this application; and

FIG. 9 is a schematic structural diagram of a network-side device according to an embodiment of this application.

**DETAILED DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

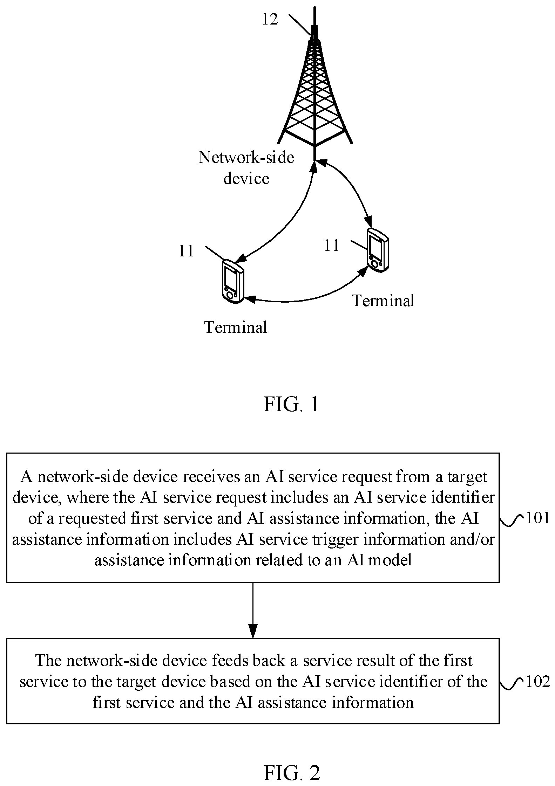

FIG. 1 is a block diagram of a wireless communication system applicable to an embodiment of this application. The wireless communication system includes a terminal 11 and a network-side device 12. The terminal 11 may be a mobile phone, a tablet computer (Tablet Personal Computer), a laptop computer (Laptop Computer), a personal digital assistant (personal digital assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

Currently, wireless networks of the mobile communication systems merely serve as communication pipelines, and cannot provide AI services to external applications. Therefore, the embodiments of this application provides an AI service processing method, in which assistance information is carried in an AI service request sent, so that the mobile communication system can receive the assistance information and provide a higher-quality service for an external application based on the assistance information.

The following specifically describes the AI service processing method provided in the embodiments of this application through specific embodiments and application scenarios thereof with reference to the accompanying drawings.

FIG. 2 is a first flowchart of an AI service processing method according to an embodiment of this application. As shown in FIG. 2, the method provided in this embodiment includes:

Step 101: A network-side device receives an AI service request from a target device, where the AI service request includes an AI service identifier of a requested first service and AI assistance information, the AI assistance information includes AI service trigger information and/or assistance information related to an AI model.

Specifically, the network-side device is, for example, a base station function or a core network function, and the target device is, for example, a terminal, an intelligent driving vehicle, and the like.

The target device sends an AI service request to the network-side device, and the network-side device receives the AI service request, where the AI service request includes an AI service identifier and AI assistance information.

The AI assistance information includes AI service trigger information and/or assistance information related to an AI model.

The assistance information related to the AI model may be, for example, assistance information used for AI model inference or computation, such as input data for the AI model, supplementary output data, or assistance information for processing input data.

For example, the first service is environmental sensing, such as sensing of roads, static objects, and dynamic objects. The target device may be a vehicle-mounted terminal, and the assistance information may include location information of a vehicle and sensing data of the surrounding environment.

For example, the first service is path planning, that is, planning a driving path of a vehicle, the target device may be, for example, a vehicle-mounted terminal, and the assistance information may include location information of the vehicle, sensing data of the surrounding environment by the vehicle, and a sensing result of the surrounding environment by the vehicle.

Step 102: The network-side device feeds back a service result of the first service to the target device based on the AI service identifier of the first service and the AI assistance information.

Specifically, the network-side device provides a corresponding service based on the AI service identifier and the AI assistance information, that is, obtains a service result of the first service corresponding to the AI service identifier, for example, obtains the service result based on the AI model, and feeds back the service result to the target device.

According to the method of this embodiment, the network-side device receives an AI service request from the target device, where the AI service request includes an AI service identifier of a requested first service and AI assistance information, and the AI assistance information includes AI service trigger information and/or assistance information related to an AI model. The network-side device obtains a service result of the first service based on the AI service identifier of the first service and the AI assistance information, and feeds back the service result to the target device. In this way, the network-side device identifies the assistance information provided by the target device, so as to provide services for the target device based on the assistance information, thereby improving quality of AI services and providing better support for AI services in mobile communication systems.

Optionally, the AI service trigger information includes at least one of the following:

input data of an AI model of a second service; and
first indication information for indicating validity or invalidity of the input data of the AI model of the second service; where
the second service provides input data for the first service.

Specifically, the first service is an AI service requested by the target device, and the second service provides necessary input data for the first service. For example, the first service is path planning and the second service is environmental sensing.

The input data of the AI model of the second service is used for inference or computation by the AI model of the second service to obtain a service result and provide input data for the AI model of the first service, thereby improving the quality of the first service. For the first indication information indicating the validity or invalidity of the input data of the AI model of the second service, the input data of the AI model of the second service can be filtered based on the first indication information so as to reduce invalid data, thereby decreasing the amount of input data and improving processing efficiency. That is, the trigger information can activate processing of the AI model of the second service to obtain the service result of the second service, and the service result of the second service may be used as the input data of the AI model of the first service, thereby improving quality of service.

Optionally, the first indication information includes at least one of the following: a validity range, an invalidity range, and a valid distance threshold.

Specifically, in a case that the input data of the AI model is less than or equal to the valid distance threshold, the input data of the AI model is valid. Alternatively, the input data can be compared directly with information of the validity range or invalidity range to determine its validity.

All items included in the first indication information can be used to screen the input data of the AI model to reduce invalid data, thereby improving accuracy of the input data, reducing the amount of input data, and improving model processing efficiency.

Optionally, the assistance information related to the AI model includes at least one of the following:

first assistance information for processing input data of the AI model;
input data of the AI model; and
supplementary information of output data of the AI model.

Specifically, the first assistance information for processing the input data of the AI model is, for example, a validity range of the input data and assistance information for coordinate transformation (such as location information), that is, to perform preprocessing on the input data to make the input data better match an input required by the AI model, thereby improving processing efficiency of the AI model.

The input data of the AI model is, for example, raw sensing data obtained by the target device, and is able to improve accuracy of the output data of the AI model and further improve quality of service.

The supplementary information of the output data of the AI model is, for example, a sensing result obtained by the target device, and can be used as a supplement to the output data of the AI model, so as to optimize the AI model, thereby improving quality of service.

The assistance information related to the AI model is, for example, shown in Table 1.

**Table 1**

| Example | Service identifier | Assistance information | Data purpose | Service result |
|---|---|---|---|---|
| 1 | Environmental sensing | Location information of the target device | Indicating a valid input range; and extracting valid data from sensing data of the network-side device; and indicating a target tracking object. | Environmental sensing result |
| 2 | | Raw sensing data of the target device | Model inference input or computation input | |
| 3 | | Sensing result of the target device | Result merging with a model inference output or computation output. | |
| 4 | Path planning | Location information of the target device | Triggering a sensing subservice; indicating a valid input range; and indicating a target tracking object. | Path planning result |
| 5 | | Raw sensing data of the target device | Triggering a sensing subservice; being a model inference input or computation input | |
| 6 | | Sensing result of the target device | Model inference input or computation input | |

Optionally, the first assistance information includes at least one of the following:

second indication information for indicating a validity range or an invalidity range of the input data of the AI model; and

second assistance information for performing coordinate system transformation on the input data of the AI model.

Specifically, the second indication information for indicating the validity range or the invalidity range may be, for example, providing a data range or providing a judgment condition. For example, in a case that the input data meets the judgment condition, the input data is valid. Assuming that the input data is location information of an obstacle, for example, if a distance between the input data and a current location of the target device is less than a preset threshold, the input data is valid. The input data can be filtered and screened to improve accuracy of the input data, reduce the amount of invalid data, improve the processing efficiency, and improve quality of service results.

For example, the second assistance information is the location information of the target device. Based on the location information, coordinate transformation is performed on location information of an obstacle or a traffic light included in the input data, that is, the input data may be preprocessed to make the input data better match the input required by the AI model, thereby improving the processing efficiency of the AI model.

For example, invalid input data of the AI model is removed based on the location information,

so as to improve the efficiency of model inference. Using point cloud data as an example, not all data is processed, but some unnecessary data may be deleted and then processed efficiently.

Assuming that three-dimensional coordinates of the sensing data point are (x,y,z), the location information of the target device is (x0,y0,z0), and the valid distance threshold is h_th, the invalid data range to be deleted is:

$$abs(x-x0) > h\_th,$$

or

$$abs(y-y0) > h\_th,$$

or

$$abs(z-z0) > h\_th.$$

Optionally, the valid distance threshold may be predefined or sent to the target device by the network-side device.

For example, invalid input data of the AI model is removed based on the location information and size information of the target device,

so as to improve the efficiency of model inference. Using point cloud data as an example, not all data is processed, but some unnecessary data may be deleted and then processed efficiently.

Assuming that three-dimensional coordinates of the sensing data point are (x,y,z), the target device is the terminal, and three-dimensional boundaries of the vehicle where the target device is located is {(xb1,xb2), (yb1,yb2), (zb1,zb2)}, the invalid data range to be deleted is:

(x>xb1) and (x<xb2), and
(y>yb1) and (y<yb2), and
(z>zb1) and (z<zb2), that is, the space where the vehicle is located is deleted.

The size information of the vehicle where the target device is located can be sent by the target device to the second device, or obtained by the second device from a sensing result.

Optionally, in a case that the first service is trajectory planning, the AI service trigger information further includes first information; or

in a case that the first service is environmental sensing, the first assistance information further includes first information; where
the first information includes at least one of the following:

a location of a target object; and
a size of the target object; where
the target object is the target device.

For example, the first service is trajectory planning, and the second service is environmental sensing, which provides necessary input data for trajectory planning. The AI service trigger information includes the first indication information indicating the validity or invalidity, and may also include the first information, such as the location of the target object and the size of the target object. The target object may be the target device, such as a vehicle or a vehicle where the vehicle-mounted terminal is located, so that the network-side device can obtain more complete and richer information, thereby improving the quality of service.

Optionally, the second assistance information includes at least one of the following: a location of a target object and a timestamp; and the second assistance information is used to assist the network-side device in tracking the target object, where the target object is the target device.

For example, the target object is tracked based on the location information:

Assuming that the target device is a vehicle, the network-side device is a base station. The base station is equipped with a camera, which can collect video information of the target device when the target device enters the camera range.

Assume that the location information of the target device is $(x0, y0, z0)$ and a location timestamp is $t0$, which are included in the second assistance information. The base station may locate a timestamp of the camera data based on $t0$. Further, the location of the target device in this frame of image is determined based on the location information $(x0,y0,z0)$ of the target device and the location information of the base station itself, so as to be marked as a tracking object, and then the location of the target device in subsequent frames is marked based on similarity of objects between adjacent frames.

Optionally, in a case that the first service is trajectory planning, the location of the target object is the center of coordinate system transformation.

Optionally, in a case that the first service is trajectory planning, the AI assistance information is a sensing result, and the sensing result is the input data of the AI model of the first service. For example, the sensing result is used as all or part of the input data for AI model inference or computation of the first service.

In the foregoing implementation, based on the AI assistance information, the quality of service of the AI service provided in the network-side device can be improved.

Optionally, the step 102 can be implemented in the following manner:

determining, by the network-side device, an AI service type based on the AI service identifier; and

feeding back, by the network-side device, the service result of the first service to the target device based on the AI service type and the AI assistance information.

Optionally, the AI service type includes at least one of the following:

environmental sensing, environmental reconstruction, environmental prediction, vehicle prediction, path planning, and trajectory planning.

Specifically, the network-side device may determine an AI service type of the current first service based on the AI service identifier, obtain the service result of the first service based on the AI service type and the AI assistance information, and feed it back to the target device. For example, the AI service type is environmental sensing, and the service result is a sensing result; or the AI service type is path planning, and the service result is a path planning result.

Optionally, in a case that the first service is environmental sensing, the service result includes at least one of the following:

traffic light information, obstacle information, or lane line information.

Optionally, the obstacle information includes at least one of the following:

an identifier, an obstacle type, an obstacle boundary, an obstacle size, or speed information.

Optionally, the obstacle type includes at least one of the following:

unknown classification, static object, dynamic object, pedestrian, bicycle, vehicle, large vehicle, motorcycle, or electric vehicle.

Optionally, the obstacle boundary includes at least one of the following:

a three-dimensional cuboid boundary with the target object as a center of a coordinate system; and
a two-dimensional rectangular boundary with the target object as the center of the coordinate system; where
the target object is the target device.

For example, the target device is a vehicle-mounted device, and the target object may be a vehicle where the target device is located.

For example, the first service is environmental sensing, and the service result contains results of multiple timestamps. There may be a fixed time interval between the timestamps.

The sensing result includes traffic light information, obstacle information, or lane line information.

The traffic light information is, for example, shown in Table 2.

**Table 2**

| Type | Traffic light information |
|---|---|
| Two-dimensional boundary | {(0,1),(20,20)} |
| Information | Red light or stop |

In the two-dimensional boundary {(0,1) and (20,20)}, (0,1) respectively represent boundary point coordinates of the traffic light on the X axis, for example, a right direction perpendicular to the path centerline; and (20,20) respectively represent two boundary point coordinates of the traffic light on the Y axis, for example, a forward direction parallel to the path centerline, and the center of the coordinate system is, for example, the vehicle. In this case, the two-dimensional boundary indicates that the traffic light is 20 meters in front of the vehicle, the left boundary of the traffic light coincides with the centerline of the lane line, and the length of the traffic light is 1 meter.

For example, the obstacle information is shown in Table 3:

**Table 3**

| Tracking object identifier | Obstacle type | Three-dimensional boundary | Velocity vector |
|---|---|---|---|
| 1 | Vehicle | {(10,12),(5,10),(0,1.5)} | 50km/h |
| 2 | Vehicle | {(20, 12),(5, 10),(0,2)} | 60km/h |
| 3 | Bicycle | {(10,10),(0,2),(0,2)} | 15km/h |
| 4 | Pedestrian | {(11,11),(0, 0),(0,2)} | 3km/h |

{(10,12), (5,10), and (0,1.5)} in Table 3 respectively represent the coordinate ranges of the obstacle in the X, Y, and Z axes. For example, the X axis direction is a right direction perpendicular to the path centerline, the Y axis direction is a forward direction parallel to the path centerline, and the Z axis is a height direction. The obstacle is 2 meters wide, 5 meters long, and 1.5 meters high.

The traffic light information, the obstacle information, the lane line information, and the like can assist the vehicle in driving, such as stopping at a red light, slowing down at an obstacle, keeping driving in the lane, and the like, thereby improving intelligent driving experience of the vehicle.

Optionally, in a case that the first service is path planning, the service result includes a plurality of pieces of planning information, where each piece of planning information includes at least one of the following:

a trajectory point identifier, a time interval from a current moment, a distance, a speed, and an acceleration.

Optionally, the distance includes lateral distance and longitudinal distance; the speed includes lateral speed and longitudinal speed; and the acceleration includes lateral acceleration and longitudinal acceleration.

For example, the planning result includes a plurality of future time intervals. Assuming that the time interval is 1 second and the total planning duration is 15 seconds, there are 15 planning points, as shown in Table 4.

**Table 4**

| Trajectory point identifier | Time Interval from a current moment | Lateral distance (m) | Longitudinal distance (m) | Lateral speed (km/h) | Longitudinal speed (km/h) |
|---|---|---|---|---|---|
| 1 | 1s | 0 | 8 | 0 | 30 |
| 2 | 2s | 0 | 20 | 0 | 40 |
| 3 | 3s | 0 | 35 | 0 | 50 |
| 4 | 4s | 0 | 50 | 0 | 50 |
| ... | ... | 0 | 65 | 0 | 50 |
| 15 | 15s | 0 | 80 | 0 | 50 |

The lateral distance is a distance relative to the centerline of the lane line.

In the foregoing implementation, based on the assistance information provided, the network-side device can obtain more complete and richer information, thereby improving the quality of service, and the target device can reduce its own complexity by utilizing services provided by the network-side device. Further, the network-side device can identify different assistance information, and therefore can provide more flexible services for the target device.

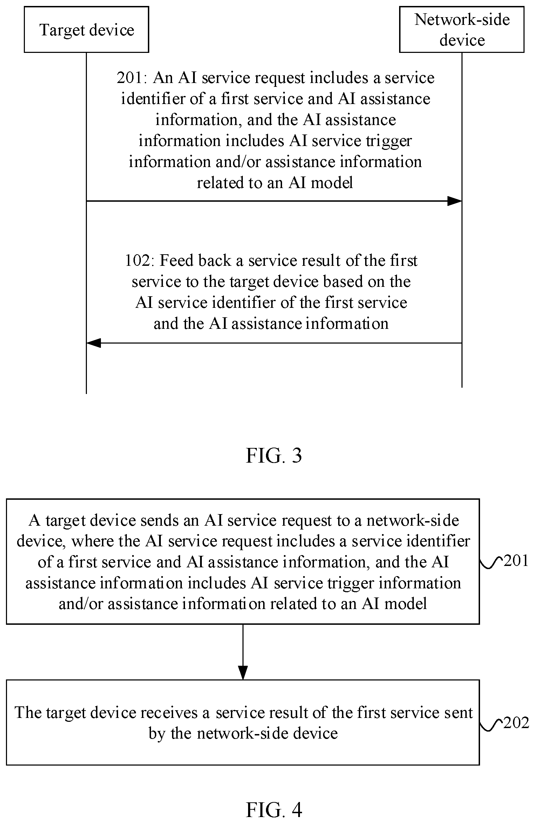

FIG. 4 is a second flowchart of an AI service processing method according to an embodiment of this application. As shown in FIG. 3 and FIG. 4, the method provided in this embodiment includes the following steps.

Step 201: A target device sends an AI service request to a network-side device, where the AI service request includes a service identifier of a first service and AI assistance information, and the AI assistance information includes AI service trigger information and/or assistance information related to an AI model.

Step 202: The target device receives a service result of the first service sent by the network-side device.

Optionally, the assistance information related to the AI model includes at least one of the following:

first assistance information for processing input data of the AI model;
input data of the AI model; and
supplementary information of output data of the AI model.

Optionally, the AI service trigger information includes at least one of the following:

input data of an AI model of a second service; and
first indication information for indicating validity or invalidity of the input data of the AI model of the second service; where
the second service provides input data for the first service.

Optionally, the first indication information includes at least one of the following: a validity range, an invalidity range, and a valid distance threshold.

Optionally, the first assistance information includes at least one of the following:

second indication information for indicating a validity range or an invalidity range of the input data of the AI model; and
second assistance information for performing coordinate system transformation on the input data of the AI model.

Optionally, the second assistance information includes at least one of the following: a location of a target object and a timestamp; and the second assistance information is used to assist the network-side device in tracking the target object, where the target object is the target device.

Optionally, in a case that the first service is environmental sensing, the service result includes at least one of the following:
traffic light information, obstacle information, or lane line information.

Optionally, the obstacle information includes at least one of the following:
an identifier, an obstacle type, an obstacle boundary, an obstacle size, or speed information.

Optionally, in a case that the first service is path planning, the service result includes a plurality of planning information, where each planning information includes at least one of the following:
a trajectory point identifier, a time interval from a current moment, a distance, a speed, and an acceleration.

Optionally, the obstacle boundary includes at least one of the following:

a three-dimensional cuboid boundary with the target object as a center of a coordinate system; and
a two-dimensional rectangular boundary with the target object as the center of the coordinate system; where
the target object is the target device.

Optionally, in a case that the first service is trajectory planning, the AI service trigger information further includes first information; or

in a case that the first service is environmental sensing, the first assistance information further includes first information; where
the first information includes at least one of the following:

a location of a target object; and
a size of the target object; where
the target object is the target device.

Optionally, in a case that the first service is trajectory planning, the location of the target object is a center of coordinate system transformation.

Optionally, in a case that the first service is trajectory planning, the AI assistance information is a sensing result, and the sensing result is input data of an AI model of the first service.

The specific implementation process and technical effects of the method in this embodiment are similar to those in the network-side method embodiments. For details, refer to detailed descriptions in the network-side method embodiments, which will not be repeated here.

The execution subject of the AI service processing method provided in the embodiments of this application may be an AI service processing apparatus. In the embodiments of this application, the AI service processing apparatus provided in the embodiments of this application is described by using the AI service processing method being executed by the AI service processing apparatus as an example.

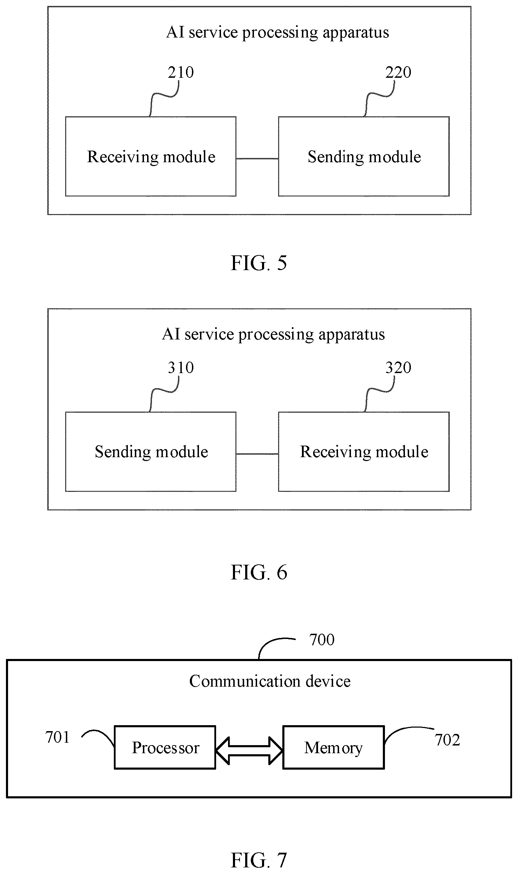

FIG. 5 is a first schematic structural diagram of an AI service processing apparatus according to this application. As shown in FIG. 5, the AI service processing apparatus provided in this embodiment includes:

a receiving module 210, configured to receive an AI service request from a target device, where the AI service request includes an AI service identifier of a requested first service and AI assistance information, the AI assistance information includes AI service trigger information and/or assistance information related to an AI model; and

a sending module 220, configured to feed back a service result of the first service to the target device based on the AI service identifier of the first service and the AI assistance information.

Optionally, the assistance information related to the AI model includes at least one of the following:

first assistance information for processing input data of the AI model;

input data of the AI model; and

supplementary information of output data of the AI model.

Optionally, the AI service trigger information includes at least one of the following:

input data of an AI model of a second service; and

first indication information for indicating validity or invalidity of the input data of the AI model of the second service; where

the second service provides input data for the first service.

Optionally, the first indication information includes at least one of the following: a validity range, an invalidity range, and a valid distance threshold.

Optionally, the first assistance information includes at least one of the following:

second indication information for indicating a validity range or an invalidity range of the input data of the AI model; and

second assistance information for performing coordinate system transformation on the input data of the AI model.

Optionally, the second assistance information includes at least one of the following: a location of a target object and a timestamp; and the second assistance information is used to assist the network-side device in tracking the target object, where the target object is the target device.

Optionally, the apparatus further includes a processing module configured to determine an AI service type based on the AI service identifier; and

obtain a service result of the first service based on the AI service type and the AI assistance information.

The sending module 220 is specifically configured to feed back the service result of the first service obtained by the processing module to the target device.

Optionally, the AI service type includes at least one of the following:

environmental sensing, environmental reconstruction, environmental prediction, vehicle prediction, path planning, and trajectory planning.

Optionally, in a case that the first service is environmental sensing, the service result includes at least one of the following:

traffic light information, obstacle information, or lane line information.

Optionally, the obstacle information includes at least one of the following:

an identifier, an obstacle type, an obstacle boundary, an obstacle size, or speed information.

Optionally, in a case that the first service is path planning, the service result includes a plurality of planning information, where each planning information includes at least one of the following:

a trajectory point identifier, a time interval from a current moment, a distance, a speed, and an acceleration.

Optionally, the obstacle boundary includes at least one of the following:

a three-dimensional cuboid boundary with the target object as a center of a coordinate system; and

a two-dimensional rectangular boundary with the target object as the center of the coordinate system; where the target object is the target device.

Optionally, in a case that the first service is trajectory planning, the AI service trigger information further includes first information; or

in a case that the first service is environmental sensing, the first assistance information further includes first information; where
the first information includes at least one of the following:

a location of a target object; and
a size of the target object; where
the target object is the target device.

Optionally, in a case that the first service is trajectory planning, the location of the target object is a center of coordinate system transformation.

Optionally, in a case that the first service is trajectory planning, the AI assistance information is a sensing result, and the sensing result is input data of an AI model of the first service.

The apparatus in this embodiment can be configured to execute the method in any one of the foregoing network-side method embodiments, and its specific implementation process and technical effects are similar to those in the network-side method embodiments. For details, refer to detailed descriptions in the network-side method embodiments, which will not be repeated here.

FIG. 6 is a second schematic structural diagram of an AI service processing apparatus according to this application. As shown in FIG. 6, the AI service processing apparatus provided in this embodiment includes:

a sending module 310, configured to send an AI service request to a network-side device, where the AI service request includes a service identifier of a first service and AI assistance information, and the AI assistance information includes AI service trigger information and/or assistance information related to an AI model; and
a receiving module 320, configured to receive a service result of the first service sent by the network-side device.

Optionally, the assistance information related to the AI model includes at least one of the following:

first assistance information for processing input data of the AI model;
input data of the AI model; and
supplementary information of output data of the AI model.

Optionally, the AI service trigger information includes at least one of the following:

input data of an AI model of a second service; and
first indication information for indicating validity or invalidity of the input data of the AI model of the second service; where
the second service provides input data for the first service.

Optionally, the first indication information includes at least one of the following: a validity range, an invalidity range, and a valid distance threshold.

Optionally, the first assistance information includes at least one of the following:

second indication information for indicating a validity range or an invalidity range of the input data of the AI model; and
second assistance information for performing coordinate system transformation on the input data of the AI model.

Optionally, the second assistance information includes at least one of the following: a location of a target object and a timestamp; and the second assistance information is used to assist the network-side device in tracking the target object, where the target object is the target device.

Optionally, in a case that the first service is environmental sensing, the service result includes at least one of the following:
traffic light information, obstacle information, or lane line information.

Optionally, the obstacle information includes at least one of the following:
an identifier, an obstacle type, an obstacle boundary, an obstacle size, or speed information.

Optionally, in a case that the first service is path planning, the service result includes a plurality of planning information, where each planning information includes at least one of the following:
a trajectory point identifier, a time interval from a current moment, a distance, a speed, and an acceleration.

Optionally, the obstacle boundary includes at least one of the following:

a three-dimensional cuboid boundary with the target object as a center of a coordinate system; and
a two-dimensional rectangular boundary with the target object as the center of the coordinate system; where
the target object is the target device.

Optionally, in a case that the first service is trajectory planning, the AI service trigger information further includes first information; or

in a case that the first service is environmental sensing, the first assistance information further includes first information; where
the first information includes at least one of the following:

a location of a target object; and
a size of the target object; where
the target object is the target device.

Optionally, in a case that the first service is trajectory planning, the location of the target object is a center of coordinate system transformation.

Optionally, in a case that the first service is trajectory planning, the AI assistance information is a sensing result, and the sensing result is input data of an AI model of the first service.

The apparatus in this embodiment can be configured to execute the method in any one of the foregoing method embodiments on the target device side, and its specific implementation process and technical effects are similar to those in the method embodiments on the target device side. For details, refer to detailed descriptions in the method embodiments on the target device side, which will not be repeated here.

The AI service processing apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The AI service processing apparatus provided in this embodiment of this application is capable of implementing the processes implemented in the method embodiments in FIG. 2 to FIG. 4, with the same technical effects achieved. To avoid repetition, details are not described herein again.

Optionally, as shown in FIG. 7, an embodiment of this application further provides a communication device 700, including a processor 701 and a memory 702. A program or instructions capable of running on the processor 701 are stored in the memory 702. For example, when the communication device 700 is a target device and when the program or the instructions are executed by the processor 701, the steps of the foregoing embodiments of the AI service processing method are implemented, with the same technical effects achieved. When the communication device 700 is a network-side device and when the program or the instructions are executed by the processor 701, the processes of the foregoing embodiment of the AI service processing method are implemented, with the same technical effects achieved. To avoid repetition, details are not described herein again.

An embodiment of this application further provides a target device, including a processor and a communication interface, where the communication interface is configured to send an AI service request to a network-side device, where the AI service request includes a service identifier of a first service and AI assistance information, and the AI assistance information includes AI service trigger information and/or assistance information related to an AI model; and the communication interface is further configured to receive a service result of the first service sent by the network-side device. The target device embodiment corresponds to the foregoing method embodiment on the target device side, and the implementation processes and implementations of the foregoing method embodiment can be applied to the target device embodiment, with the same technical effects achieved.

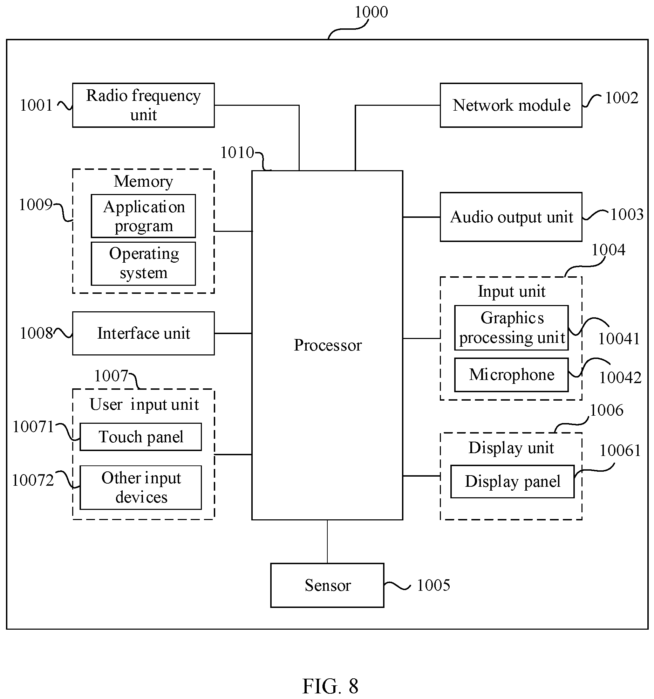

Optionally, the target device may be a terminal. Specifically, FIG. 8 is a schematic diagram of a hardware structure of a terminal implementing an embodiment of this application.

The terminal 1000 includes but is not limited to at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal shown in FIG. 8 does not constitute any limitation on the terminal. The terminal may include more or fewer components than shown in the figure, or a combination of some components, or the components disposed differently. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include the display panel 10061. The display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to at least one of a physical keyboard, a functional button (such as a volume control button or a power on/off button), a trackball, a mouse, and a joystick. Details are not described herein.

In this embodiment of this application, after receiving downlink data from a network-side device, the radio frequency unit 1001 sends the downlink data to the processor 1010 for processing; and the radio frequency unit 1001 also sends uplink data to the network-side device. Generally, the radio frequency unit 1001 includes but is not limited to an antenna, at least one amplifier, a transceiver, a coupler, a low noise amplifier, a duplexer, and the like.

The memory 1009 may be configured to store software programs or instructions and various data. The memory 1009 may mainly include a first storage area for storing programs or instructions and a second storage area for storing data, where the first storage area may store an operating system, an application program or instructions required by at least one function (for example, an audio playing function and an image playing function), and the like. In addition, the memory 1009 may be a volatile memory or a non-volatile memory, or the memory 1009 may include a volatile memory and a non-volatile memory. In addition, the memory 1009 may include a highspeed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1009 described in this embodiment of this application includes but is not limited to these and any other suitable types of memories, for example, at least one disk storage device, a flash memory device, or another volatile solid-state storage device.

The processor 1010 may include one or more processing units. Optionally, the processor 1010 may integrate an application processor and a modem processor. The application processor mainly processes operations related to an operating system, a user interface, an application program, instructions, or the like. The modem processor mainly processes wireless communication signals, for example, a baseband processor. It can be understood that the modem processor may alternatively be not integrated in the processor 1010.

The radio frequency unit 1001 is configured to send an AI service request to a network-side device, where the AI service request includes a service identifier of a first service and AI assistance information, and the AI assistance information includes AI service trigger information and/or assistance information related to an AI model; and receive a service result of the first service sent by the network-side device.

In the foregoing implementation, the target device sends an AI service request to the network-side device, where the AI service request includes an AI service identifier of a requested first service and AI assistance information, and the AI assistance information includes AI service trigger information and/or assistance information related to an AI model. The network-side device obtains a service result of the first service based on the AI service identifier of the first service and the AI assistance information, and feeds it back to the target device. In this way, the network-side device identifies the assistance information provided by the target device, so as to provide services for the target device based on the assistance information, thereby improving quality of AI services and providing better support for AI services in mobile communication systems.

Optionally, the assistance information related to the AI model includes at least one of the following:

first assistance information for processing input data of the AI model;
input data of the AI model; and
supplementary information of output data of the AI model.

Optionally, the AI service trigger information includes at least one of the following:

input data of an AI model of a second service; and
first indication information for indicating validity or invalidity of the input data of the AI model of the second service.

Optionally, the first indication information includes at least one of the following: a validity range, an invalidity range, and a valid distance threshold.
the second service provides input data for the first service.

Optionally, the first assistance information for processing the input data of the AI model includes at least one of the following:

second indication information for indicating a validity range or an invalidity range of the input data of the AI model; and
second assistance information for performing coordinate system transformation on the input data of the AI model.

Optionally, the second assistance information includes at least one of the following: a location of a target object and a timestamp; and the second assistance information is used to assist the network-side device in tracking the target object, where the target object is the target device.

Optionally, in a case that the first service is environmental sensing, the service result includes at least one of the following:
traffic light information, obstacle information, or lane line information.

Optionally, the obstacle information includes at least one of the following:
an identifier, an obstacle type, an obstacle boundary, an obstacle size, or speed information.

Optionally, in a case that the first service is path planning, the service result includes a plurality of planning information, where each planning information includes at least one of the following:
a trajectory point identifier, a time interval from a current moment, a distance, a speed, and an acceleration.

Optionally, the obstacle boundary includes at least one of the following:

a three-dimensional cuboid boundary with the target object as a center of a coordinate system; and
a two-dimensional rectangular boundary with the target object as the center of the coordinate system; where
the target object is the target device.

Optionally, in a case that the first service is trajectory planning, the AI service trigger information further includes first information; or

in a case that the first service is environmental sensing, the first assistance information further includes first information; where
the first information includes at least one of the following:

a location of a target object; and
a size of the target object; where
the target object is the target device.

Optionally, in a case that the first service is trajectory planning, the location of the target object is a center of coordinate system transformation.

Optionally, in a case that the first service is trajectory planning, the AI assistance information is a sensing result, and the sensing result is input data of an AI model of the first service.

An embodiment of the application further provides a network-side device, including a processor and a communication interface, where the communication interface is configured to receive an AI service request from a target device, where the AI service request includes an AI service identifier of a requested first service and AI assistance information, the AI assistance information includes AI service trigger information and/or assistance information related to an AI model; and feed back a service result of the first service to the target device based on the AI service identifier of the first service and the AI assistance information. The network-side device embodiment corresponds to the foregoing network-side device method embodiment, and the implementation processes and implementations of the foregoing method embodiments can be applied to the network-side device embodiment, with the same technical effects achieved.

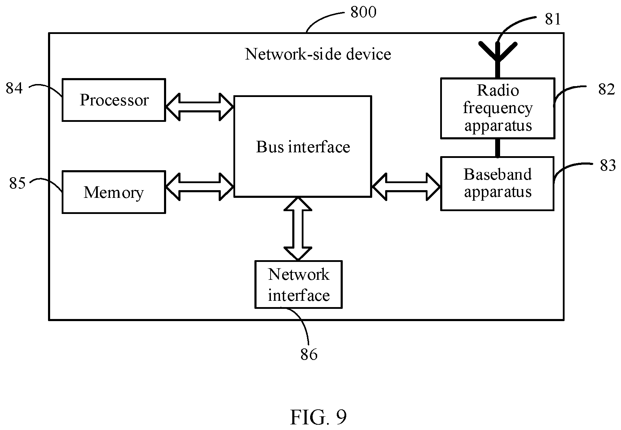

Specifically, an embodiment of this application further provides a network-side device. As shown in FIG. 9, the network-side device 800 includes an antenna 81, a radio frequency apparatus 82, a baseband apparatus 83, a processor 85, and a memory 85.

The antenna 81 is connected to the radio frequency apparatus 82.

In an uplink direction, the radio frequency apparatus 82 receives information by using the antenna 81, and sends the received information to the baseband apparatus 83 for processing.

In a downlink direction, the baseband apparatus 83 processes to-be-sent information, and sends the information to the radio frequency apparatus 82; and the radio frequency apparatus 82 processes the received information and then sends the information out by using the antenna 81.

The frequency band processing apparatus may be located in the baseband apparatus 83. The method performed by the access network device in the foregoing embodiments may be implemented in the baseband apparatus 83, and the baseband apparatus 83 includes a processor 84 and a memory 85.

The baseband apparatus 83 may include, for example, at least one baseband processing unit, where a plurality of chips are disposed on the baseband processing unit. As shown in FIG. 9, one of the chips is, for example, the processor 84, and connected to the memory 85 through a bus interface, to invoke the program in the memory 85 to perform the operations of the access network device shown in the foregoing method embodiment.

The access network device 800 may further include a network interface 86, configured to exchange information with the radio frequency apparatus 82, where the interface is, for example, a common public radio interface (common public radio interface, CPRI for short).

Specifically, the access network device 800 in this embodiment of this application further includes: instructions or a program stored in the memory 85 and capable of running on the processor 85. The processor 85 invokes the instructions or program in the memory 85 to execute the method executed by the modules shown in FIG. 5, with the same technical effects achieved. To avoid repetition, details are not described herein again.

An embodiment of the present invention further provides a readable storage medium, where a program or an instruction is stored in the readable storage medium. When the program or instruction is executed by a processor, the processes of the foregoing AI service processing method embodiment can be implemented, with same technical effects achieved. To avoid repetition, details are not described herein again.

The processor is a processor in the terminal described in the above embodiments. The readable storage medium includes a computer-readable storage medium, for example, a computer read only memory ROM, a random access memory RAM, a magnetic disk, or an optical disc.

Another embodiment of this application provides a chip, where the chip includes a processor and a communication interface, the communication interface is coupled to the processor, and the processor is configured to run a program or instructions to implement the processes of the foregoing embodiments of the AI service processing method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the AI service processing method, with the same technical effects achieved. To avoid repetition, details are not repeated herein.

An embodiment of this application further provides a communication system, including a target device and a network-side device, where the target device can be configured to execute the steps of the AI service processing method described above, and the network-side device can be configured to execute the steps of the AI service processing method described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on this understanding, the technical scheme of this application may be embodied in the form of a computer software product, which is stored in a storage medium (such as ROM/RAM, magnetic disk and optical disk) and includes several instructions to make a terminal (which may be a mobile phone, a computer, a server, an air conditioner, or a network device, and the like.) execute the methods described in various embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. An artificial intelligence AI service processing method, comprising:

   receiving, by a network-side device, an AI service request from a target device, wherein the AI service request comprises an AI service identifier of a requested first service and AI assistance information, the AI assistance information comprises AI service trigger information and/or assistance information related to an AI model; and feeding back, by the network-side device, a service result of the first service to the target device based on the AI service identifier of the first service and the AI assistance information.

2. The method according to claim 1, wherein the assistance information related to the AI model comprises at least one of the following:

   first assistance information for processing input data of the AI model;
   input data of the AI model; and
   supplementary information of output data of the AI model.

3. The method according to claim 1, wherein the AI service trigger information comprises at least one of the following:

   input data of an AI model of a second service; and
   first indication information for indicating validity or invalidity of the input data of the AI model of the second service; wherein
   the second service provides input data for the first service.

4. The method according to claim 3, wherein the first indication information comprises at least one of the following: a validity range, an invalidity range, and a valid distance threshold.

5. The method according to claim 2, wherein
   the first assistance information comprises at least one of the following:

   second indication information for indicating a validity range or an invalidity range of the input data of the AI model; and
   second assistance information for performing coordinate system transformation on the input data of the AI model.

6. The method according to claim 5, wherein the second assistance information comprises at least one of the following: a location of a target object and a timestamp; and the second assistance information is used to assist the network-side device in tracking the target object, wherein the target object is the target device.

7. The method according to any one of claims 1 to 6, wherein the feeding back, by the network-side device, a service result of the first service to the target device based on the AI service identifier of the first service and the AI assistance information comprises:

   determining, by the network-side device, an AI service type based on the AI service identifier; and
   feeding back, by the network-side device, the service result of the first service to the target device based on the AI service type and the AI assistance information.

8. The method according to claim 7, wherein the AI service type comprises at least one of the following: environmental sensing, environmental reconstruction, environmental prediction, vehicle prediction, path planning, and trajectory planning.

9. The method according to any one of claims 1 to 6, wherein
in a case that the first service is environmental sensing, the service result comprises at least one of the following:

traffic light information, obstacle information, or lane line information; wherein
the obstacle information comprises at least one of the following:

an identifier, an obstacle type, an obstacle boundary, an obstacle size, or speed information; and
in a case that the first service is path planning, the service result comprises a plurality of planning information, wherein each planning information comprises at least one of the following:
a trajectory point identifier, a time interval from a current moment, a distance, a speed, and an acceleration.

10. The method according to claim 9, wherein
the obstacle boundary comprises at least one of the following:

a three-dimensional cuboid boundary with the target object as a center of a coordinate system; and
a two-dimensional rectangular boundary with the target object as the center of the coordinate system; wherein
the target object is the target device.

11. The method according to claim 2, wherein

in a case that the first service is trajectory planning, the AI service trigger information further comprises first information; or
in a case that the first service is environmental sensing, the first assistance information further comprises first information; wherein
the first information comprises at least one of the following:

a location of a target object; and
a size of the target object; wherein
the target object is the target device.

12. The method according to claim 6, wherein
in a case that the first service is trajectory planning, the location of the target object is a center of coordinate system transformation.

13. The method according to claim 2, wherein
in a case that the first service is trajectory planning, the AI assistance information is a sensing result, and the sensing result is input data of an AI model of the first service.

14. An artificial intelligence AI service processing method, comprising:

sending, by a target device, an AI service request to a network-side device, wherein the AI service request comprises a service identifier of a first service and AI assistance information, and the AI assistance information comprises AI service trigger information and/or assistance information related to an AI model; and
receiving, by the target device, a service result of the first service sent by the network-side device.

15. The method according to claim 14, wherein the assistance information related to the AI model comprises at least one of the following:

first assistance information for processing input data of the AI model;
input data of the AI model; and
supplementary information of output data of the AI model.

16. The method according to claim 14, wherein
the AI service trigger information comprises at least one of the following:

input data of an AI model of a second service; and
first indication information for indicating validity or invalidity of the input data of the AI model of the second service; wherein

the second service provides input data for the first service.

17. The method according to claim 16, wherein the first indication information comprises at least one of the following: a validity range, an invalidity range, and a valid distance threshold.

18. The method according to claim 15, wherein
the first assistance information comprises at least one of the following:

second indication information for indicating a validity range or an invalidity range of the input data of the AI model; and
second assistance information for performing coordinate system transformation on the input data of the AI model.

19. The method according to claim 18, wherein the second assistance information comprises at least one of the following: a location of a target object and a timestamp; and the second assistance information is used to assist the network-side device in tracking the target object, wherein the target object is the target device.

20. The method according to any one of claims 14 to 19, wherein
in a case that the first service is environmental sensing, the service result comprises at least one of the following:

traffic light information, obstacle information, or lane line information; wherein
the obstacle information comprises at least one of the following:

an identifier, an obstacle type, an obstacle boundary, an obstacle size, or speed information; and
in a case that the first service is path planning, the service result comprises a plurality of planning information,
wherein each planning information comprises at least one of the following:
a trajectory point identifier, a time interval from a current moment, a distance, a speed, and an acceleration.

21. The method according to claim 20, wherein
the obstacle boundary comprises at least one of the following:

a three-dimensional cuboid boundary with the target object as a center of a coordinate system; and
a two-dimensional rectangular boundary with the target object as the center of the coordinate system; wherein
the target object is the target device.

22. The method according to claim 15, wherein

in a case that the first service is trajectory planning, the AI service trigger information further comprises first information; or
in a case that the first service is environmental sensing, the first assistance information further comprises first information; wherein
the first information comprises at least one of the following:

a location of a target object; and
a size of the target object; wherein
the target object is the target device.

23. The method according to claim 19, wherein
in a case that the first service is trajectory planning, the location of the target object is a center of coordinate system transformation.

24. The method according to claim 15, wherein
in a case that the first service is trajectory planning, the AI assistance information is a sensing result, and the sensing result is input data of an AI model of the first service.

25. An AI service processing apparatus, comprising:

a receiving module, configured to receive an AI service request from a target device, wherein the AI service request comprises an AI service identifier of a requested first service and AI assistance information, the AI assistance information comprises AI service trigger information and/or assistance information related to an AI model; and

a sending module, configured to feed back a service result of the first service to the target device based on the AI service identifier of the first service and the AI assistance information.

26. An AI service processing apparatus, comprising:

a sending module, configured to send an AI service request to a network-side device, wherein the AI service request comprises a service identifier of a first service and AI assistance information, and the AI assistance information comprises AI service trigger information and/or assistance information related to an AI model; and

a receiving module, configured to receive a service result of the first service sent by the network-side device.

27. A target device, comprising a processor and a memory, wherein the memory stores a program or instructions capable of running on the processor, and when the program or instructions are executed by the processor, the steps of the AI service processing method according to any one of claims 1 to 13 are implemented.

28. A network-side device, comprising a processor and a memory, wherein the memory stores a program or instructions capable of running on the processor, and when the program or instructions are executed by the processor, the steps of the AI service processing method according to any one of claims 14 to 24 are implemented.

29. A readable storage medium, wherein the readable storage medium stores a program or instructions, and when the program or instructions are executed by a processor, the steps of the AI service processing method according to any one of claims 1 to 13 are implemented, or the steps of the AI service processing method according to any one of claims 14 to 24 are implemented.

FIG. 1

A network-side device receives an AI service request from a target device, where the AI service request includes an AI service identifier of a requested first service and AI assistance information, the AI assistance information includes AI service trigger information and/or assistance information related to an AI model ∿101

The network-side device feeds back a service result of the first service to the target device based on the AI service identifier of the first service and the AI assistance information ∿102

FIG. 2

Target device

Network-side
device

201: An AI service request includes a service
identifier of a first service and AI assistance
information, and the AI assistance
information includes AI service trigger
information and/or assistance information
related to an AI model

102: Feed back a service result of the first
service to the target device based on the
AI service identifier of the first service
and the AI assistance information

FIG. 3

A target device sends an AI service request to a network-side
device, where the AI service request includes a service identifier
of a first service and AI assistance information, and the AI
assistance information includes AI service trigger information
and/or assistance information related to an AI model

201

The target device receives a service result of the first service sent
by the network-side device

202

FIG. 4

AI service processing apparatus

210

220

Receiving module

Sending module

FIG. 5

AI service processing apparatus

310

320

Sending module

Receiving module

FIG. 6

700

Communication device

701

Processor

Memory

702

FIG. 7

1000

1001 — Radio frequency unit

1002 — Network module

1010 —

1009 — Memory
- Application program
- Operating system

1003 — Audio output unit

1004 — Input unit
- Graphics processing unit — 10041
- Microphone — 10042

1008 — Interface unit

Processor

1007 — User input unit
- Touch panel — 10071
- Other input devices — 10072

1006 — Display unit
- Display panel — 10061

Sensor — 1005

FIG. 8

FIG. 9

## INTERNATIONAL SEARCH REPORT

| International application No. |
|---|
| **PCT/CN2023/127759** |

| A. | CLASSIFICATION OF SUBJECT MATTER |
|---|---|

H04W4/44(2018.01)i; H04W16/22(2009.01)i

According to International Patent Classification (IPC) or to both national classification and IPC

| B. | FIELDS SEARCHED |
|---|---|

Minimum documentation searched (classification system followed by classification symbols)

    IPC:H04W,H04L

Documentation searched other than minimum documentation to the extent that such documents are included in the fields searched

Electronic data base consulted during the international search (name of data base and, where practicable, search terms used)

    CNABS; CNTXT; VEN; USTXT; EPTXT; WOTXT; ENTXTC; CNKI; IEEE; 3GPP: 辅助, 人工智能, 标识, 服务, AI, artificial, ID, intelligence, Position, Service, Terminal, UE, Vehicle, assist+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114071484 A (HUAWEI TECHNOLOGIES CO., LTD.) 18 February 2022 (2022-02-18) description, paragraphs [0175]-[0440], and figures 1-6 | 1-29 |
| A | CN 112740336 A (SAMSUNG ELECTRONICS CO., LTD.) 30 April 2021 (2021-04-30) entire document | 1-29 |
| A | KR 20210070700 A (LG ELECTRONICS INC.) 15 June 2021 (2021-06-15) entire document | 1-29 |
| A | TCL COMMUNICATION LTD. "Discussion on AI/ML Model Management Framework for Positioning Enhancement Use-case Document for: Discussion" *3GPP TSG-RAN WG2 Meeting #119bis Electronic, R2-2210461,* 30 September 2022 (2022-09-30), entire document | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 November 2023** | **05 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 618 599 A1

| | | | |
|---|---|---|---|
| | INTERNATIONAL SEARCH REPORT | International application No. | |
| | Information on patent family members | **PCT/CN2023/127759** | |

| Patent document cited in search report | | | Publication date (day/month/year) | Patent family member(s) | | | Publication date (day/month/year) |
|---|---|---|---|---|---|---|---|
| CN | 114071484 | A | 18 February 2022 | None | | | |
| CN | 112740336 | A | 30 April 2021 | WO | 2020022825 | A1 | 30 January 2020 |
| | | | | US | 2020035361 | A1 | 30 January 2020 |
| | | | | EP | 3776593 | A1 | 17 February 2021 |
| | | | | EP | 3776593 | A4 | 26 May 2021 |
| KR | 20210070700 | A | 15 June 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211387143